# EUROPEAN PATENT APPLICATION

(11) **EP 4 796 573 A1**
(43) Date of publication of application: **26.08.2026**
(21) Application number: 25224489.2
(22) Date of filing: 17.12.2025
(51) Int. Cl.: C08G 18/50, C08G 18/22, C08G 18/32, C08G 18/48, C08G 18/66, C08G 18/73, C08G 18/76, C08L 75/08

(54) **ANTISTATIC SOLUTION BY IONIC POLYESTER POLYOL WITH A CUSTOMIZED STRUCTURE FOR POLYURETHANE**

(71) Applicant: BASF SE, 67056 Ludwigshafen am Rhein (DE)
(72) Inventor: KANEDA, Keisuke, 49448 Lemfoerde (DE); AL BATAL, Mona, 67056 Ludwigshafen am Rhein (DE); JOOST, Maximilian, 67056 Ludwigshafen am Rhein (DE); KOTTERBA, Marianne, 67056 Ludwigshafen am Rhein (DE); WILM, Lukas Friedrich Berto, 49448 Lemfoerde (DE); BREIBACH, Elke, 49448 Lemfoerde (DE); BLUEMEL, Marcus Harald, 49448 Lemfoerde (DE); LATINI, Giulio, 49448 Lemfoerde (DE)
(74) Representative: Altmann Stößel Dick Patentanwälte PartG mbB

(57) **Abstract**

The present invention relates to a polyol composition (PC) for the production of a polyurethane, in particular a thermoplastic polyurethane, comprising at least one compound (P1) having at least two hydrogen atoms which are reactive towards isocyanates and (P1) has the general formula (A1)-(B)-(A2). The invention furthermore relates to a process for producing a polyurethane, preferably a thermoplastic polyurethane, comprising mixing an isocyanate composition (IC) comprising at least one polyisocyanate (11); and a polyol composition (PC), comprising at least one compound (P1); and reacting the isocyanate composition (IC) and the polyol composition (PC) to form a polyurethane. The present invention also relates to the polyurethane obtained in the process as well as the use thereof for producing an article, in particular for producing an article selected from the group consisting of flooring, a shoe or a part of a shoe.

## Description

The present invention relates to a polyol composition (PC) for the production of a polyurethane, in particular a ther-moplastic polyurethane, comprising at least one compound (P1) having at least two hydrogen atoms which are reactive towards isocyanates and (P1) has the general formula (A1)-(B)-(A2). The invention furthermore relates to a process for producing a polyurethane, preferably a thermoplastic polyurethane, comprising mixing an isocyanate composition (IC) comprising at least one polyisocyanate (I1); and a polyol composition (PC), comprising at least one compound (P1); and reacting the isocyanate composition (IC) and the polyol composition (PC) to form a polyurethane. The present invention also relates to the polyurethane obtained in the process as well as the use thereof for producing an article, in particular for producing an article selected from the group consisting of flooring, a shoe or a part of a shoe.

Static charges can occur on electrical conductors or by such isolated objects or persons and are often undesirable, harmful and sometimes dangerous. In potentially explosive atmospheres, electrostatic discharge can even cause explosions. Therefore, attempts are made to reduce the risk of electrostatic charging by grounding these objects or persons.

In many cases the electrical non-conductors are polymers. Since these polymers can usually not be replaced by conductive materials, it is attempted to increase the conductivity of the polymers by the addition of antistatic additives and thus to ground the objects or materials concerned.

For example, DE 3531660 describes antistatic polyurethane shoe soles. The antistatic effect is achieved by 0.01 to 0.3 wt .-% chemically bonded sulfonate groups. Furthermore, EP 270 009 describes antistatic polyurethane shoe soles, wherein the antistatic additive is sodium triphenyl borate.

The use of different quaternary ammonium salts to increase the conductivity of polymers is described in EP 1 134268. DE 3528597 describes the use of carbon blacks as conductivity improvers.

Currently, one of the commonly used antistatic agents are ionic liquids used in thermoplastic polyurethanes as well as antistatic PU systems. The use of ionic liquids is for example disclosed in EP1984438A1. The employed ionic liquids, however, have various disadvantages in terms of price, availability, migration behavior leading to blooming, color (yellow to brown) and stopping the urethane reaction leading to low molecular weights. Thus, an alternative to using are of interest.

An object of the present invention is achieving comparable or better conductivity in antistatic TPU without the disadvantages of migration, poor color, processing, and hydrolytic stability.

According to the present invention, this object has been solved by a polyol composition (PC) for the production of a polyurethane, in particular a thermoplastic polyurethane, comprising
a) at least one compound (P1) having at least two hydrogen atoms which are reactive towards isocyanates and (P1) has the general formula (I)

   (A1)-(B)-(A2)

   wherein (A1) and (A2) are independently selected from polyether groups and polyester groups with a molecular weight Mn in the range of from 50 to 5000 g/mol, and
   (B) has the general formula 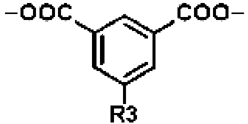
   wherein R3 is selected from functional groups SO₃M,
   and M is Na, K, Li or Cs;
b) optionally a compound (P2) having at least two hydrogen atoms which are reactive towards isocyanates;
c) optionally a chain extender (CE); and
d) optionally additives.

It has surprisingly been found that the presence of the polyol (P1) in polyol compositions for the preparation of polyurethanes allows to prepare products with no or little discoloration, high molecular weight and without blooming.

The polyol composition (PC) according to the present invention comprises at least one compound (P1) having at least two hydrogen atoms which are reactive towards isocyanates and (P1) has the general formula (I)

(A1)-(B)-(A2)

wherein (A1) and (A2) are independently selected from polyether groups and polyester groups with a molecular weight Mn in the range of from 50 to 5000 g/mol, and
(B) has the general formula 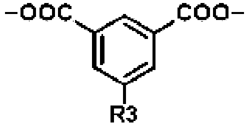
wherein R3 is selected from functional groups SO₃M,
and M is Na, K, Li or Cs;

The polyol composition optionally comprises a compound (P2) having at least two hydrogen atoms which are reactive towards isocyanates; a chain extender (CE); and additives.

Preferably, (A1) and (A2) are independently selected from polyether groups and polyester groups with a molecular weight Mn in the range of from 250 to 3000 g/mol, in particular in the range of from 500 to 1000 g/mol. Preferably, (A1) and (A2) are independently selected form linear polyether groups or polyester groups, in particular linear polyether groups.

Preferably, R3 is a functional group selected from SO₃Na and SO₃K.

According to a further embodiment, the present invention is also directed to the polyol composition as disclosed above, wherein compound (P1) has the general formula (II) 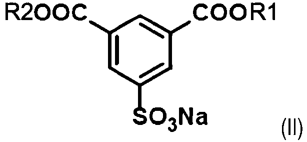 wherein
- R1 and R2: independently is a radical of formula -(CₓH₂ₓ-O)_{y}-H,
- x: is an integer from 2 to 4;
- y: is an integer from 1 to 20;

The polyol composition (PC) may for example comprise further polyols as component (P2). Typically, the polyol composition comprises one or more polyols (P2) in an amount of 5 to 99 % by weight, more preferable in an amount of 10 to 95 % by weight, in particular in an amount in the range of from 50 to 90 % by weight. Preferably, the polyol composition comprises the polyol (P1) in an amount in the range of 0.1 to 99 % by weight, more preferable in an amount in the range of 0.1 to 75% by weight, for example in an amount of 100 to 10000 ppm, more preferable in the range of from 400 to 10000 ppm, particularly preferable in the range of from 100 to 4000 ppm, more preferable in the range of from 1500 to 3000 ppm.

According to a further embodiment, the present invention is also directed to the polyol composition as disclosed above, wherein the polyol composition comprises component (P1) in an amount in the range of 0.1 to 99 % by weight.

According to the present invention, it is also possible to use mixtures of two or more polyols. Suitable polyols which may be used as compound (P2) are in principle known to the person skilled in the art. Preferably, component (P2) is selected from polyether polyols and polyester Polyols.

Suitable polyols may be polyester polyols. Preferably in accordance with the invention, the polyol is selected from the group consisting of polyester polyols and more preferably from linear polyester polyols.

Suitable polyester polyols, especially polyester diols, may be prepared, for example, from dicarboxylic acids having 2 to 12 carbon atoms, preferably 4 to 10 carbon atoms, and polyhydric alcohols. Examples of useful dicarboxylic acids include: aliphatic dicarboxylic acids, such as succinic acid, glutaric acid, adipic acid, suberic acid, azelaic acid and sebacic acid, or aromatic dicarboxylic acids, such as phthalic acid, isophthalic acid and terephthalic acid. The dicarboxylic acids may be used individually or in the form of mixtures, for example in the form of a mixture of succinic acid, sebacic acid and adipic acid. For preparation of the polyester diols, it may possibly be advantageous to use, rather than the dicarboxylic acids, the corresponding dicarboxylic acid derivatives such as carboxylic diesters having 1 to 4 carbon atoms in the alcohol radical, for example dimethyl terephthalate or dimethyl adipate, carboxylic anhydrides, for example succinic anhydride, glutaric anhydride or phthalic anhydride, or carbonyl chlorides. Examples of polyhydric alcohols are glycols having 2 to 10, preferably 2 to 6, carbon atoms, for example ethylene glycol, diethylene glycol, butane-1,4-diol, pentane-1,5-diol, hexane-1,6-diol, decane-1,10-diol, 2,2-dimethylpropane-1,3-diol, propane-1,3-diol, 2-methylpropane-1,3-diol, 3-methylpentane-1,5-diol or dipropylene glycol. The polyhydric alcohols may be used individually or as mixtures, for example in the form of a butane-1,4-diol and/or propane-1,3-diol mixture. In addition, it is also possible to include small amounts of up to 3% by weight of the total reaction mixture of higher-functionality polyols of low molecular weight, for example 1,1,1-trimethylolpropane or pentaerythritol. Preference is given in accordance with the invention to the use of exclusively bifunctional starting compounds.

The molecular weight of the polyol used may vary within wide ranges. Suitable examples include polyols that have an average molecular weight in the range from 500 to 3500 g/mol, further preferably in the range from 800 to 3000 g/mol.

According to the invention, polyol may also be a polyetherpolyol, for example a polyetherpolyol such as polytetramethylene ether glycol, polyethylene glycol, or polypropylene glycol and copolymers thereof.

According to the present invention, it is also possible to use mixtures of two or more polyols for the preparation of the thermoplastic polyurethane. The polyols used or the polyol composition preferably have an average functionality in the range from 1.7 and 2.3, preferably in the range from 1.9 and 2.1, especially 2.

Suitable polyols are described, for example, in "Kunststoffhandbuch [Plastics Handbook], volume 7, Polyurethane [Polyurethanes]", Carl Hanser Verlag, 3rd edition 1993, chapter 3.1.

According to the invention, the polyol composition may also comprise a solvent. Suitable solvents are known per se to those skilled in the art.

According to the invention, a chain extender (CE) may be used for the preparation of the thermoplastic polyurethane. Suitable chain extenders are known per se to those skilled in the art.

Chain extenders used are compounds having at least two groups reactive toward isocyanates. Groups reactive toward isocyanates may especially be NH, OH or else SH groups. Suitable examples are diamines or else diols or water. Preference is given to using at least one chain extender selected from the group consisting of compounds having at least two isocyanate-reactive groups having a molecular weight of < 500 g/mol.

Chain extenders used may, for example, be commonly known aliphatic, araliphatic, aromatic and/or cycloaliphatic compounds having a molecular weight of 50 to 499 g/mol, preferably bifunctional compounds, for example alkanediols having 2 to 10 carbon atoms in the alkylene radical, for example diols selected from the group consisting of C2 to C6 diols, preferably butane-1,4-diol, hexane-1,6-diol and/or di-, tri-, tetra-, penta-, hexa-, hepta-, octa-, nona-and/or decaalkylene glycols having 3 to 8 carbon atoms, preferably unbranched alkanediols, especially propane-1,3-diol, butane-1,4-diol and hexane-1,6-diol. It is further preferably possible here to use aliphatic, araliphatic, aromatic and/or cycloaliphatic diols having a molecular weight of 50 g/mol to 220 g/mol. Preference is given to alkanediols having 2 to 12 carbon atoms in the alkylene radical, especially di-, tri-, tetra-, penta-, hexa-, hepta-, octa-, nona-and/or decaalkylene glycols. For the present invention, particular preference is given to ethanediol, propanediol, butanediol, pentanediol, hexanediol, or mixtures thereof.

It is also possible in accordance with the invention to use mixtures of two or more chain extenders.

The employed amount of the chain extender and the polyol composition may be varied within broad ranges. For example, in the context of the present invention, the chain extender may be used in an amount in the range from 1:40 to 10:1, based on the polyol used.

According to the invention, further additives may be added to the composition. It is also possible in accordance with the invention to use combinations of two or more additives.

Examples of auxiliaries and additives include surface-active substances, flame retardants, nucleating agents, oxidation stabilizers, antioxidants, lubricants and demolding aids, dyes and pigments, stabilizers, for example against light, heat or discoloration, inorganic and/or organic fillers, reinforcers and plasticizers. Suitable auxiliaries and additives can be found, for example, in Kunststoffhandbuch, volume VII, edited by Vieweg and Höchtlen, Carl Hanser Verlag, Munich 1966 (p. 103-113).

According to a further aspect, the present invention is also directed to a process for producing a polyurethane, preferably a thermoplastic polyurethane, comprising
(I) mixing
   (i) an isocyanate composition (IC) comprising at least one polyisocyanate (I1); and
   (ii) a polyol composition (PC), comprising at least one compound (P1);
(II) reacting the isocyanate composition (IC) and the polyol composition (PC) to form a polyurethane.

The process comprises steps (I) and (II) but may also comprise further steps. According to step (I), the isocyanate composition (IC) comprising at least one polyisocyanate (11); and the polyol composition (PC), comprising at least one compound (P1), are mixed. According to step (II), the isocyanate composition (IC) and the polyol composition (PC) are reacted to form a polyurethane. With respect to the preferred embodiments of the polyol composition (PC), reference is made to the disclosure above.

Typically, a polyisocyanate (11), in particular a diisocyanate is used according to the invention. Preferred diisocyanates within the context of the present invention are aliphatic or aromatic diisocyanates, especially aromatic diisocyanates.

In the context of the present invention, prereacted products may be used as isocyanate components, in which a polyol is reacted with an isocyanate in a preceding reaction step. The products obtained have essentially isocyanate end groups and may be used in accordance with the invention.

Aliphatic diisocyanates used are customary aliphatic and/or cycloaliphatic diisocyanates, for example tri-, tetra-, penta-, hexa-, hepta- and/or octamethylene diisocyanate, 2-methylpentamethylene 1,5-diisocyanate, 2-ethyltetramethylene 1,4-diisocyanate, hexamethylene 1,6-diisocyanate (HDI), pentamethylene 1,5-diisocyanate, butylene 1,4-diisocyanate, trimethylhexamethylene 1,6-diisocyanate, 1,3-Bis(isocyanatemethyl) cyclohexan (H6XDI), 1-isocyanato-3,3,5-trimethyl-5-isocyanatomethylcyclohexane (isophorone diisocyanate, IPDI), 1,4- and/or 1,3-bis(isocyanatomethyl)cyclohexane (HXDI), cyclohexane 1,4-diisocyanate, 1-methylcyclohexane 2,4- and/or 2,6-diisocyanate, methylene dicyclohexyl 4,4'-, 2,4'- and/or 2,2'-diisocyanate (H12MDI).

Preferred aliphatic polyisocyanates are hexamethylene 1,6-diisocyanate (HDI), pentamethylene 1,5-diisocyanate, 1-isocyanato-3,3,5-trimethyl-5-isocyanatomethylcyclohexane and methylene dicyclohexyl 4,4'-, 2,4'- and/or 2,2'-diisocyanate (H12MDI).

Suitable aromatic diisocyanates are especially naphthylene 1,5-diisocyanate (NDI), tolylene 2,4- and/or 2,6-diisocyanate (TDI), diphenylmethane 2,2'-, 2,4'- and/or 4,4'-diisocyanate (MDI), 3,3'-dimethyl-4,4'-diisocyanatodiphenyl (TODI), xylylene diisocyanates (XDI), p-phenylene diisocyanate (PDI), diphenylethane 4,4'-diisocyanate (EDI), diphenylmethane diisocyanate, 3,3'-dimethyldiphenyl diisocyanate, diphenylethane 1,2-diisocyanate and/or phenylene diisocyanate.

It is also possible in the context of the present invention to use higher-functionality isocyanates, by way of example triisocyanates, for example triphenylmethane 4,4',4"-triisocyanate, and also the cyanurates of the aforementioned diisocyanates, and the oligomers obtainable by partial reaction of diisocyanates with water, for example the biurets of the aforementioned diisocyanates, and additionally oligomers obtainable by controlled reaction of semiblocked diisocyanates with polyols having an average of more than two and preferably three or more hydroxyl groups.

For example, the polyisocyanate may be selected from the group consisting of diphenylmethane 2,2'-, 2,4'- and 4,4'-diisocyanate (MDI), tolylene 2,4- and 2,6-diisocyanate (TDI), hexamethylene diisocyanate (HDI), 1-isocyanato-4-[(4-isocyanatocyclohexyl)methyl]cyclohexane (H12MDI) or naphthalene 1,5-diisocyanate (NDI).

In a further embodiment, the present invention therefore also relates to a process for producing a polyurethane as described above, wherein the polyisocyanate is selected from the group consisting of diphenylmethane 2,2'-, 2,4'-and 4,4'-diisocyanate (MDI), tolylene 2,4- and 2,6-diisocyanate (TDI), hexamethylene diisocyanate (HDI), 1-isocyanato-4-[(4-isocyanatocyclohexyl)methyl]cyclohexane (H12MDI) or naphthalene 1,5-diisocyanate (NDI). The polyisocyanate (I2) is preferably selected from the group consisting of diphenylmethane 2,2'-, 2,4'- and 4,4'-diisocyanate (MDI), tolylene 2,4- and 2,6-diisocyanate (TDI), hexamethylene diisocyanate (HDI), 1-isocyanato-4-[(4-isocyanatocyclohexyl)methyl]cyclohexane (H12MDI) and naphthalene 1,5-diisocyanate (NDI).

In case mixtures of two isocyanates are used, the isocyanates are typically used in a ratio of 1:20 to 1:3.

The mixing and the reaction according to step (I) and (II) can be conducted in apparatuses that are known per se to the person skilled in the art, for example heatable/coolable stirred tanks or reaction extruders. The reaction typically is conducted at temperatures known per se to the person skilled in the art, for example at a temperature in the range from 20 to 250°C, preferably in the range from 40 to 130°C, further preferably at a temperature in the range from 70 to 90°C.

According to the invention, it is also possible for the process to comprise further steps, for example a pretreatment of the components or an after-treatment of the composition obtained, for example a heat treatment or shaping steps to form an article.

According to a further aspect, the present invention is also directed to the polyurethane obtained or obtainable according to the process of the present invention, in particular wherein the polyurethane is a thermoplastic polyurethane.

The molecular weight of the thermoplastic polyurethane may vary within wide ranges. It is particularly advantageous for the thermoplastic polyurethane to have a molecular weight in the range from 20 000 to 500 000 g/mol, determined by means of GPC, more preferably in the range from 50 000 to 300 000 g/mol., in particular in the range of from 80 000 to 250 000 g/mol, preferably in the range of from 90 000 to 200 000 g/mol.

The polyurethane of the invention and the polyurethane obtained or obtainable by a process of the invention can be processed further by processes known to the person skilled in the art to give the desired films, moldings, rolls, fibers, automobile trim, hoses, cable connectors, bellows, trailing cables, cable sheaths, gaskets, belts or damping elements, for example injection molding, calendering or extrusion.

According to a further aspect, the present invention is also directed to the use of the polyurethane according to the present invention for producing an article, in particular for producing an article selected from the group consisting of flooring, a shoe or a part of a shoe.

According to a further aspect, the present invention is also directed to the use of polyol (P1) for the preparation of a polyurethane, in particular a thermoplastic polyurethane.

Further embodiments of the present invention are apparent from the claims and the examples. It will be appreciated that the features of the object/processes/uses according to the invention that are mentioned above and elucidated below are usable not only in the combination specified in each case but also in other combinations without departing from the scope of the invention. Thus, for example, the combination of a preferred feature with a particularly preferred feature or of a feature not characterized further with a particularly preferred feature etc. is also encompassed implicitly even if this combination is not mentioned explicitly.

The present invention is illustrated in more detail by the following embodiments and combinations of embodiments which are apparent from the corresponding dependency references and other references. In particular, it should be noted that in every case where a range of embodiments is mentioned, for example in the context of an expression such as "the process according to any of embodiments 1 to 4", each embodiment in this range is deemed to be explicitly disclosed to those skilled in the art, i.e. the wording of this expression is to be understood by those skilled in the art as synonymous with "the process according to any of embodiments 1, 2, 3 and 4".
1. Polyol composition (PC) for the production of a polyurethane, in particular a thermoplastic polyurethane, comprising
   a) at least one compound (P1) having at least two hydrogen atoms which are reactive towards isocyanates and (P1) has the general formula (I)

      (A1)-(B)-(A2)

      wherein (A1) and (A2) are independently selected from polyether groups and polyester groups with a molecular weight Mn in the range of from 50 to 5000 g/mol, and
      (B) has the general formula 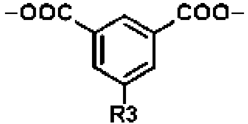
      wherein R3 is selected from functional groups SO₃M,
      and M is Na, K, Li or Cs;
   b) optionally a compound (P2) having at least two hydrogen atoms which are reactive towards isocyanates;
   c) optionally a chain extender (CE); and
   d) optionally additives.
2. The polyol composition according to embodiment 1, wherein compound (P1) has the general formula (II) 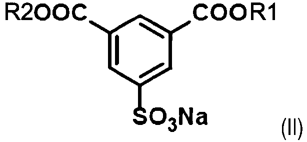 wherein
   - R1 and R2: independently is a radical of formula -(CₓH₂ₓ-O)_{y}-H,
   - x: is an integer from 2 to 4;
   - y: is an integer from 1 to 20.
3. The polyol component according to embodiment 1, wherein the polyol composition comprises component (P1) in an amount in the range of 0.1 to 99 % by weight.
4. A process for producing a polyurethane, preferably a thermoplastic polyurethane, comprising
   (I) mixing
      (i) an isocyanate composition (IC) comprising at least one polyisocyanate (11); and
      (ii) a polyol composition (PC), comprising at least one compound (P1);
   (II) reacting the isocyanate composition (IC) and the polyol composition (PC) to form a polyurethane.
5. A process for producing a polyurethane, preferably a thermoplastic polyurethane, comprising
   (I) mixing
      (i) an isocyanate composition (IC) comprising at least one polyisocyanate (11); and
      (ii) a polyol composition (PC), comprising at least one compound (P1);
   (II) reacting the isocyanate composition (IC) and the polyol composition (PC) to form a polyurethane,
   wherein compound (P1) has at least two hydrogen atoms which are reactive towards isocyanates and (P1) has the general formula (I)

   (A1)-(B)-(A2)

   wherein (A1) and (A2) are independently selected from polyether groups and polyester groups with a molecular weight Mn in the range of from 50 to 5000 g/mol, and
   (B) has the general formula 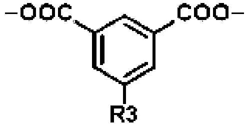
   wherein R3 is selected from functional groups SO₃M,
   and M is Na, K, Li or Cs.
6. The process according to embodiment 5, wherein compound (P1) has the general formula (II) 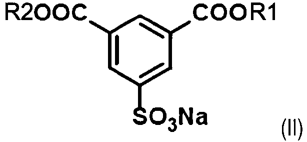 wherein
   - R1 and R2: independently is a radical of formula -(CₓH₂ₓ-O)_{y}-H,
   - x: is an integer from 2 to 4;
   - y: is an integer from 1 to 20.
7. The process according to embodiment 5, wherein the polyol composition comprises component (P1) in an amount in the range of 0.1 to 99 % by weight.
8. The process according to embodiment 3, wherein the polyol composition comprises component (P1) in an amount in the range of 0.1 to 99 % by weight.
9. Polyurethane obtained or obtainable according to the process according to any one of embodiments 4 to 8.
10. Polyurethane according to embodiment 9, wherein the polyurethane is a thermoplastic polyurethane.
11. Thermoplastic polyurethane obtained or obtainable according to a process comprising
   (I) mixing
      (i) an isocyanate composition (IC) comprising at least one polyisocyanate (11); and
      (ii) a polyol composition (PC), comprising at least one compound (P1);
   (II) reacting the isocyanate composition (IC) and the polyol composition (PC) to form a polyurethane.
12. Thermoplastic polyurethane obtained or obtainable according to a process comprising
   (I) mixing
      (i) an isocyanate composition (IC) comprising at least one polyisocyanate (11); and
      (ii) a polyol composition (PC), comprising at least one compound (P1);
   (II) reacting the isocyanate composition (IC) and the polyol composition (PC) to form a polyurethane,
   wherein compound (P1) has at least two hydrogen atoms which are reactive towards isocyanates and (P1) has the general formula (I)

   (A1)-(B)-(A2)

   wherein (A1) and (A2) are independently selected from polyether groups and polyester groups with a molecular weight Mn in the range of from 50 to 5000 g/mol, and
   (B) has the general formula 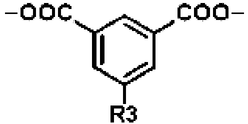
   wherein R3 is selected from functional groups SO₃M,
   and M is Na, K, Li or Cs.
13. Use of the polyurethane according to any one of embodiments 10 to 12 for producing an article, in particular for producing an article selected from the group consisting of flooring, a shoe or a part of a shoe.
14. Use of polyol (P1) for the preparation of a polyurethane, in particular a thermoplastic polyurethane.
15. Use of polyol (P1) for the preparation of a polyurethane, in particular a thermoplastic polyurethane, wherein polyol (P1) has at least two hydrogen atoms which are reactive towards isocyanates and (P1) has the general formula (I)

   (A1)-(B)-(A2)

   wherein (A1) and (A2) are independently selected from polyether groups and polyester groups with a molecular weight Mn in the range of from 50 to 5000 g/mol, and
   (B) has the general formula 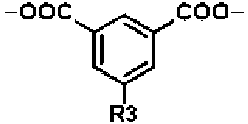
   wherein R3 is selected from functional groups SO₃M,
   and M is Na, K, Li or Cs.
16. Use of polyol (P1) for the preparation of a polyurethane, in particular a thermoplastic polyurethane, wherein compound (P1) has the general formula (II) 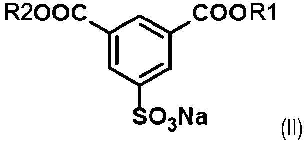 wherein
   - R1 and R2: independently is a radical of formula -(CₓH₂ₓ-O)_{y}-H,
   - x: is an integer from 2 to 4;
   - y: is an integer from 1 to 20.

The following examples serve to illustrate the invention without having a limiting effect.

### Examples

### 1. Materials used

### 1.1 Ionic Polyols and Related Compounds

Sodium 5-sulfoisophthalate (NaSIP)
Dimethyl-5-Sulfoisophthalate sodium salt (NaSIP-DME)
Polyethylene glycol (PEG): Various molecular weights (PEG400, PEG600, PEG1000)
Polytetrahydrofuran (PTHF)
Adipic acid (ADA), Diethylene glycol (DEG), 1,2-propandiol (P12), 1,6-hexanediol (H16), Isophthalic acid (IPS): Used in the synthesis of PESOLs.

### 1.2 Catalysts

TTB (Titanium tetrabutoxide)
Kosmos T900, Plural 70, Plural MG30
H3PO4 (Phosphoric acid)

### 1.3 TPU Ingredients

MDI (Methylene diphenyl diisocyanate)
HDI (Hexamethylene diisocyanate)
BDO (1,4-Butanediol)
HDO (1,6-Hexanediol)
Elastostat (antistatic TPU containing sodium perchlorate (NaOCl4)

### 2. Preparation

### 2.1 Preparation of the ionic PESOL

Ionic PESOLs 015 and 016 were prepared using NaSIP-DME and PEG600 with 100 ppm TTB catalyst. The reaction of PEG600 with NaSIP-DME required 10 h to be complete (example 2) compared to 33 h reaction time when NaSIP was used (example 3). The catalyst amount was reduced to 10 ppm for PESOL 4 to avoid increased reactivity and uncontrolled TPU synthesis. This catalyst reduction lead to increase in reaction time to around 15 h (PESOL 4). Deactivation of the remaining TTB catalyst in the ionic PESOL was done for selected samples using H3PO4. All these ionic PESOLs were liquid, and conductivities were measured at room temperature. The best conductivities of 1.50E-07 & 9.30E-07 was achieved by PESOLs 2 & 4 respectively. For comparison with PEG600-based PESOLs, PEG400 ionic PESOL 5was also synthesized using 10 ppm TTB and showed a conductivity of 9.30E-07.

Ionic PESOLs 6, 7, 8 and 9 were synthesized and were all solid at room temperature. It was found that the reaction time dropped by half when PEG1000 was used as monomer instead of PEG600 at 10 ppm TTB. All PEG1000-based PESOLs are solid. For solid PESOLs the conductivity was measured at room temperature, then @ 70°C after melting and finally at room temperature again before it solidifies.

Details are given in table 1.

**Table 1:**

| **Example** | **PESOL** | **Mwt. g/mol** | **Catalyst ppm Rxn time** | **OH# mg KOH/g** | **Visco (25°C) mPas** | **Deactivated with H₃PO₄** | **Conductivity ohm*cm** |
|---|---|---|---|---|---|---|---|
| **PESOL 1** | PEG600/NaSIP-DME | 1432.2 | 100 TTB | 89.23 | - | no | @23°C: 2.01E-09 |
| **PESOL 2** | PEG600/NaSIP-DME | 1432.2 | 100 TTB | 88.45 | 18504 | yes | @23°C: 1.50E-07 |
| | | | 10 h | | | | |
| **PESOL 3** | PEG600/NaSIP | 1432.2 | 100 TTB | 85.3 | 21103 | yes | @23°C: 8.20E-08 |
| | | | 33 h | | | | |
| **PESOL 4** | PEG600/NaSIP-DME | 1432.2 | 10 TTB | 82.8 | 20194 @75°C: 788 | yes | @23°C: 9.30E-07 |
| | | | 15 h | | | | |
| **PESOL5** | PEG400/NaSIP-DME | 1003 | 10 TTB | 103.3 | 132300 @75°C: 1952 | yes | @23°C: 4.20E-07 |
| | | | 16 h | | | | |
| **PESOL 6** | PEG1000/NaSIP-DME | 2232 | 10 TTB | 53.4 | Solid @75°C: 624 | yes | @23°C: 9.40E-07 liquid |
| | | | 7 h | | | | @70°C: 9.90E-06 liquid |
| | | | | | | | @23°C: 6.90E-10 solid |
| **PESOL7** | PEG1000/NaSIP-DME | 2232 | 10 TTB | - | Solid @75°C: 692 | One part | @23°C:1.10E-06 liquid |
| | | | 8 h | | | | @70°C: 6.30E-06 liquid |
| | | | | | | | @23°C: 4.20E-08 solid |
| **PESOL 8** | PEG1000/NaSIP-DME | 2232 | 10 TTB | 56.04 | Solid @75°C: 516 | no | @23°C: 1.90E-07 liquid |
| | | | | | | | @70°C:1.80E-07 liquid |
| | | | 8 h | | | | @23°C: 1.40E-09 solid |
| **PESOL 9** | PEG1000/NaSIP-DME | 2232 | 10 TTB | 57.45 | Solid @75°C: 459 | no | @23°C: 1.80E-07 liquid |
| | | | 9 h | | | | @70°C: 1.50E-07 liquid |
| | | | | | | | @23°C: 1.30E-09 solid |

Several PEG1000/NaSIP-DME/PTHF1000 ionic PESOLs were prepared with different catalyst amounts/ types (Table 2).

Details are given in Table 2

**Table 2:**

| **Example** | **PESOL** | **Mwt. g/mol** | **Catalyst ppm Rxn time** | **OH# mg KOH/g** | **Visco (75°C) mPas** | **Deactivated with H₃PO₄** | **Conductivity ohm*cm** |
|---|---|---|---|---|---|---|---|
| **PESOL 10** | PTHF1000/NaSIP-DME/PEG1000 | 2232 | 100 TTB | 47.13 | Solid 2412 | Yes | - |
| | | | 8 h | | | | |
| **PESOL 11** | PTHF1000/NaSIP-DME/PEG1000 | 2232 | 50 TTB | 49.15 | Solid 1995 | Yes | @23°C: 1.20E-06 liquid |
| | | | | | | | @70°C: 8.80E-06 liquid |
| | | | 8 h 30 min | | | | @23°C: 1.40E-08 solid |
| **PESOL 12** | PTHF1000/NaSIP-DME/PEG1000 | 2232 | 20 TTB error | 46.99 | Solid 2261 | Yes | @23°C: 5.00E-07 liquid |
| | | | | | | | @70°C: 4.10E-06 liquid |
| | | | | | | | @23°C: 5.40E-09 solid |
| **PESOL 13** | PTHF1000/NaSIP-DME/PEG1000 | 2232 | 20 TTB | 48.75 | Solid 1989 | One part | @23°C: 1.70E-07 liquid |
| | | | 11 h | | | | @70°C: 2.90E-07 liquid |
| | | | | | | | @23°C: 7.20E-09 solid |
| **PESOL 14** | PTHF1000/NaSIP-DME/PEG1000 | 2232 | 10 TTB | 42.31 | Solid 2334 | No | @23°C: 3.60E-07 liquid |
| | | | 35 h | | | | @70°C: 1.70E-06 liquid |
| | | | | | | | @23°C: 4.10E-09 solid |
| **PESOL 15** | PTHF1000/NaSIP-DME/PEG1000 | 2232 | | 46.26 | Solid 1464 | No | @23°C: 4.30E-07 liquid |
| | | | 10 TTB 43 h | | | | @70°C: 4.20E-06 liquid |
| | | | | | | | @23°C: 4.40E-09 solid |
| **PESOL 16** | PTHF1000/NaSIP-DME/PEG1000 | 2232 | 10 TTB 10 | 46.2 | Solid 1758 | No | - |
| | | | Kos.T900 22.5 h | | | | |
| **PESOL 17** | PTHF1000/NaSIP-DME/PEG1000 | 2232 | 10 TTB 20 | 48.9 | Solid 1315 | No | @23°C: 8.90E-07 liquid |
| | | | Kos.T900 12 h | | | | @70°C: 9.10E-06 liquid |
| | | | | | | | @23°C: 1.00E-08 solid |
| **PESOL 18** | PTHF1000/NaSIP-DME/PEG1000 | 2232 | 20 TTB | 53.53 | Solid 1125 | No | - |
| | | | 11 h | | | | |
| **PESOL 19** | PTHF650/NaSIP-DME/PEG600 | 1482 | 10 TTB | 64.73 | Solid 2124 | No | @23°C: 4.20E-07 liquid |
| | | | 25 h | | | | @70°C: 4.60E-06 liquid |
| | | | | | | | @23°C: 3.30E-07 solid |
| **PESOL 20** | PTHF1000/ADA/PEG 1000/NaSIP-DME | 3232 | 50 TTB | 33.48 | Solid 5060 | yes | @23°C: 3.90E-07 liquid |
| | | | 18 h 30 min | | | | @70°C: 2.80E-06 liquid |
| | | | | | | | @23°C: 8.80E-09 solid |
| **PESOL 21** | PTHF1000/ADA/PEG 1000/NaSIP-DME | 3232 | 20 TTB | 35.1 | Solid 4660 | no | @23°C: 2.70E-07 liquid |
| | | | | | | | @70°C: 2.20E-06 liquid |
| | | | 18 h | | | | @23°C: 1.20E-08 solid |
| **PESOL 22** | ADA/DEG/PEG1000 /NaSIP-DME | 1632 | 20 TTB | 82.74 | Solid 745 | no | - |
| | | | 8.5 h | | | | |
| **PESOL 23** | LU1902(ADS/DEG)/ PEG1000/NaSIP-DME | 1555 | 20 TTB | 78.40 | Solid 907 | no | @23°C: 1.20E-06 liquid |
| | | | | | | | @70°C: 1.30E-05 liquid |
| | | | 10 h | | | | @23°C: 2.50E-08 solid |

The ionic PESOLs were used for preparing polyurethanes and the respective properties of the materials obtained were tested

### 2.2 Preparation of hand casted TPU

The desired polyols were mixed with the chain extender in a metal beaker and heated to 100 °C overnight (12 hours). To this mixture potential further ingredients were added. The mixture was stirred continuously and after cooling to 80 °C the diisocyanate was added. At a temperature of 110 °C or after reaction for 3 min, the reaction mixture was poured into a Teflon mold placed on a heating plate at 125 °C until 10 min reaction time. After annealing at 80 °C for 15 hours, the hand cast material was cooled to room temperature and granulated. Granules were used to injection mold test plates which are used to evaluate mechanical, physical, and chemical properties.

### 2.3 Measurements for Specific surface resistivity and specific volume resistivity

To investigate performance of conductivity, the specific surface resistivity and specific volume resistivity were measured according to IEC 60093. In order to compare the results with previous project and to accelerate of screening process in the project, TPU slab directly after TPU synthesis was used as the test specimen as far as the sample quality was acceptable.

### 3. Results

**Table3a**

| **Parameter** | **Name** | **V1** | **V2** | **V3** | **V4** | **V5** |
|---|---|---|---|---|---|---|
| **HSC** | | 20.58 % | 20.58 % | 20.58 % | 21.98 % | 27.45 % |
| **KZR** | | 1.000 | 1.000 | 1.000 | 1.000 | 1.000 |
| **Mass** | | 317.84 g | 328.45 g | 341.75 g | 362.92 g | 372.15 g |
| **Polyol 1** | PESOL 2 | | | | 250.00 g | |
| **Polyol 2** | PESOL 3 | 210.00 g | | | | |
| **Polyol 3** | PESOL 5 | | 210.00 g | | | |
| **Polyol 4** | PESOL 6 | | | 240.00 g | | |
| **Polyol 5** | PESOL 13 | | | | | 250.00 g |
| **Polyol 6** | PESOL 14 | | | | | |
| **Antihydro.** | Elastostab H 01 | 2.10 g | 2.10 g | 2.40 g | | |
| **Diol 1** | 1,4-Butanediol | 17.15 g | 17.72 g | 18.42 g | | |
| **Diol 2** | 1,6-Hexanediol | | | | 32.92 g | 42.15 g |
| **Isocyanate 1** | Lupranat MES | 88.60 g | 98.63 g | 80.93 g | | |
| **Isocyanate 2** | Basonat H (HDI) | | | | 80.00 g | 80.00 g |
| **Catalyst** | TIB KAT 716 | | | | 200ppm | 200ppm |
| **Test category** | unit | | | | | |
| **Specific surface resistivity** | Ω | 7.4E+10 | 2.1E+14 | 1.5E+10 | 2.2E+08 | 4.4E+07 |
| **Specific volume resistivity** | Ω cm | 1.0E+10 | 1.2E+14 | 4.6E+08 | 9.7E+07 | 1.6E+07 |

**Table3b**

| **Parameter** | **Name** | **V6** | **V7** | **V8** | **V9** | **V10** |
|---|---|---|---|---|---|---|
| **HSC** | | 27.96 % | 20.58 % | 20.58 % | 20.58 % | 20.58 % |
| **KZR** | | 1.000 | 1.000 | 1.000 | 1.000 | 1.000 |
| **Mass** | | 373.05 g | 352.76 g | 352.76 g | 348.20 g | 348.20 g |
| **Polyol 1** | PESOL 2 | | | | | |
| **Polyol 2** | PESOL 3 | | | | | |
| **Polyol 3** | PESOL 5 | | | | | |
| **Polyol 4** | PESOL 6 | | | | | |
| **Polyol 5** | PESOL 13 | | 250.00 g | 250.00 g | | |
| **Polyol 6** | PESOL 14 | 250.00 g | | | 250.00 g | 250.00 g |
| **Antihydro.** | Elastostab H 01 | | 2.50 g | 2.50 g | 2.50 g | 2.50 g |
| **Diol 1** | 1,4-Butanediol | | 19.02 g | 19.02 g | 18.77 g | 18.77 g |
| **Diol 2** | 1,6-Hexanediol | 43.05 g | | | | |
| **Isocyanate 1** | Lupranat MES | | 81.24 g | 81.24 g | 76.93 g | 76.93 g |
| **Isocyanate 2** | Basonat H (HDI) | 80.00 g | | | | |
| **Catalyst** | TIB KAT 716 | 200ppm | | | | |
| **Test category** | unit | | | | | |
| **Specific surface resistivity** | Ω | 1.3E+08 | 1.2E+09 | 1.4E+09 | 1.1E+09 | 1.7E+09 |
| **Specific volume resistivity** | Ω cm | 1.5E+08 | 5.6E+08 | 1.6E+09 | 5.3E+08 | 9.5E+08 |

### Literature cited

DE 3531660
EP 270 009
EP 1 134268
DE 3528597
EP1984438A1
"Kunststoffhandbuch [Plastics Handbook], volume 7, Polyurethane [Polyurethanes]", Carl Hanser Verlag, 3rd edition 1993, chapter 3.1.
Kunststoffhandbuch, volume VII, edited by Vieweg and Höchtlen, Carl Hanser Verlag, Munich 1966 (p. 103-113)

## Claims

1. Polyol composition (PC) for the production of a polyurethane, in particular a thermoplastic polyurethane, comprising
a) at least one compound (P1) having at least two hydrogen atoms which are reactive towards isocyanates and (P1) has the general formula (I)
(A1)-(B)-(A2)
wherein (A1) and (A2) are independently selected from polyether groups and polyester groups with a molecular weight Mn in the range of from 50 to 5000 g/mol, and
(B) has the general formula 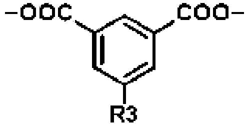
wherein R3 is selected from functional groups SO₃M,
and M is Na, K, Li or Cs;
b) optionally a compound (P2) having at least two hydrogen atoms which are reactive towards isocyanates;
c) optionally a chain extender (CE); and
d) optionally additives.

2. The polyol composition according to claim 1, wherein compound (P1) has the general formula (II) 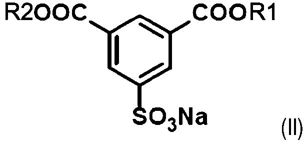 wherein
R1 and R2 independently is a radical of formula -(CₓH₂ₓ-O)_{y}-H,
x is an integer from 2 to 4;
y is an integer from 1 to 20.

3. The polyol component according to claim 1, wherein the polyol composition comprises component (P1) in an amount in the range of 0.1 to 99 % by weight.

4. A process for producing a polyurethane, preferably a thermoplastic polyurethane, comprising
(I) mixing
(i) an isocyanate composition (IC) comprising at least one polyisocyanate (I1); and
(ii) a polyol composition (PC), comprising at least one compound (P1);
(II) reacting the isocyanate composition (IC) and the polyol composition (PC) to form a polyurethane.

5. The process according to claim 3, wherein the polyol composition comprises component (P1) in an amount in the range of 0.1 to 99 % by weight.

6. Polyurethane obtained or obtainable according to the process according to any one of claims 4 or 5.

7. Polyurethane according to claim 6, wherein the polyurethane is a thermoplastic polyurethane.

8. Use of the polyurethane according to claim 6 or 7 for producing an article, in particular for producing an article selected from the group consisting of flooring, a shoe or a part of a shoe.

9. Use of polyol (P1) for the preparation of a polyurethane, in particular a thermoplastic polyurethane.
